# EUROPÄISCHE PATENTSCHRIFT

(11) **EP 0 557 801 B1**
(45) Veröffentlichungstag und Bekanntmachung des Hinweises auf die Patenterteilung: **25.06.1997**
(21) Anmeldenummer: 93102093.7
(22) Anmeldetag: 11.02.1993
(51) Int. Cl.: A47J 37/06

(54) **Hitzeverteilungsrost mit durch Metallkuppeln geschützten Gasbrennern**
Heat distributing griddle with gas burners protected by metal dome-shaped elements
Grille pour distribuer la chaleur avec des brûleurs à gaz protégés par des coupoles en métal

(30) Priorität: 14.02.1992 IT PD920020
(43) Veröffentlichungstag der Anmeldung: 01.09.1993
(73) Patentinhaber: Calzavara, Ivo, I-35011 Campodarsego (Padova) (IT); Calzavara, Tiziano, I-35011 Campodarsego (Padova) (IT)
(72) Erfinder: Calzavara, Ivo, I-35011 Campodarsego (Padova) (IT); Calzavara, Tiziano, I-35011 Campodarsego (Padova) (IT)
(74) Vertreter: Gustorf, Gerhard, Dipl.-Ing.

(56) Entgegenhaltungen:
- CH-A- 460 287
- DE-A- 1 579 474
- FR-A- 936 111
- US-A- 2 790 434
- US-A- 3 418 921
- US-A- 4 715 356

## Beschreibung

Die Erfindung betrifft einen Grill mit Gasbrennern für die Zubereitung von Speisen.

Der Kochvorgang von Speisen vom Rost erfolgte bisher mittels festen Brennmaterialien, wie Kohle, Reisigkohle, Holz u.ä., oder mittels flüssigen Materialien, wie Alkohol u.ä.; diese Materialien sind aber einerseits im Handel immer schwerer erhältlich, andererseits ist ihre Handhabung nicht leicht und daher auch oft gesundheitsschädigend.

Insbesondere haben medizinische Untersuchungen von Speiseproben, die mit Kohle, Reisigkohle oder anderen festen Brennmaterialien gegrillt wurden, ergeben, daß sie stark krebserregend sind, denn kleine verkohlte Partikelchen dringen direkt in die Speise ein.

Die Erfindung der vorliegenden Patentbeschreibung verwendet als Brennmaterial Gas und besteht in ihren wesentlichen Bestandteilen aus einem oder mehrern obenauf gelochten Rohrbrennern, die von einer hitzeverteilenden Kuppel bedeckt werden, aus einem darunterliegenden mit Wasser gefüllten Behälter und aus einem Rost, auf den die Speisen gelegt werden.

Eine Vorrichtung dieser Art, gemäß dem Oberbegriff des Anspruchs 1, ist aus Dokument FR-A-936 111 bekannt.

Das Wasser, das wegen der Hitze verdampft, umgibt die Speisen, verhindert ein Verkohlen und entfernt zugleich auch unangenehme Kochgerüche.

Der untere Wasserbehälter hat zudem auch ein Einlaßventil, das immer wieder Wasser zufließen läßt, damit die Wassermenge im Behälter immer gleich bleibt.

Jeder Brenner besteht aus einem an der oberen Seite gelochten Rohr, das auf einer Seite verschlossen ist und auf der anderen die Gaszufuhr erhält. An den Seiten des besagten Rohres sind zwei geformte Feuerschotte so angebracht, daß die unteren Schottenränder weiter voneinander entfernt sind, als die oberen Ränder der Feuerschotte; diese Schotte bilden eine Art Saugdüse (Venturirohr) für das Gas, das, aus den Löchern des Rohres kommend, von unten Luft ansaugt, sich mit ihr vermischt und dann verbrennt.

Eine kleine, nach unten gewandte, "U-förmige" Kuppel aus Blech, Gußeisen oder anderem Material, ist so über dem Rohr und über den Feuerschotten angebracht, daß zwischen der gewölbten Seite der Kuppel und den oberen Rändern der Schotte genügend Freiraum für die Gasverbrennung besteht und so, daß sich die unteren Ränder der Kuppel leicht unter den unteren Rändern der Schotte befinden. Die oberen Ränder der Schotte enden nicht am Punkt der geringsten Entfernung, sondern sie sind waagrecht so nach außen gebogen, daß sie mit den Seitenwänden der Kuppel verbunden sind; diese waagrechten Teile sind gelocht, um eine Luftzufuhr zu erlauben, die die verbrennten Gase zum Rand der Kuppel führt, diese wiederum ist mit einem Abzugrohr oder einem Kamin verbunden.

Die Gasverbrennung, die zwischen den oberen Rändern der Feurschotte und der Kuppel erfolgt, erhitzt die Kuppel selbst und verteilt somit die Hitze auch auf die Speisen, die sich auf dem darüberliegenden Rost befinden.

Auf diese Weise werden die Speisen mit den Resten der Verbrennung eingehüllt und dementsprechend gleichmäßiger gegart.

Zudem kann man für die Erhitzung der Kuppel auch die warmen Gase, die aus der Verbrennung entstehen, verwenden; daher ist es möglich mit kleinen Flammen zu kochen und eben auch Brennstoff einzusparen.

Um einen Gasrost für das Garen von Speisen zu verwirklichen, werden mehrere Brenner mit Kuppeln aneinandergereiht.

Der Gasrost für das Garen von Speisen, der mit einem oder mehreren gelochten Brennern und mit darüberliegenden metallenen Kuppeln versehen ist, wird unter einem Rost angebracht, der die Speisen aufnehmen soll.

Anhand einer praktischen Verwirklichung der Erfindung soll im Folgenden ein Beispiel aufgezeigt werden, das aber in keiner Weise einschränkend sein soll.

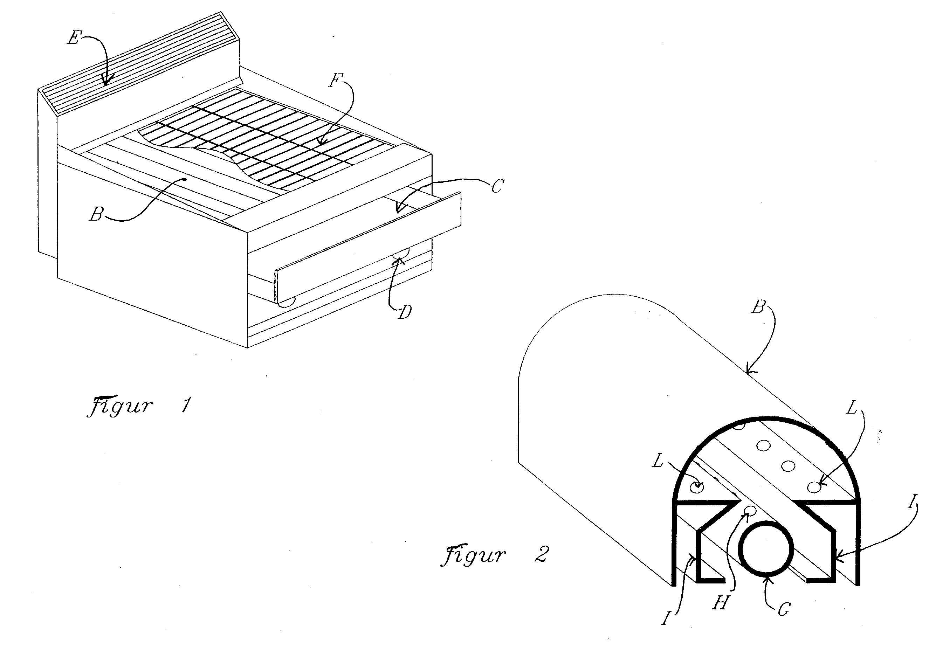

Abbildung 1 zeigt die Erfindung versehen mit den durch Metallkuppeln (B) geschützten Brennern, die einen darüberliegenden Rost (F) haben, auf den man die Speisen legt; die Metallkuppeln (B) verteilen die Hitze der Brenner zum Rost (F) und drücken die Abgase zur Entlüftung (E).

Unter den Brennern ist ein, eventuell beweglicher, Behälter (C) angebracht, der Wasser enthält, das während des Kochvorgangs durch die Hitzebildung der Brenner verdampft, dadurch das Garen der Speisen verbessert und gleichzeitig auch die Kochgerüche entfernt; die Wasssermenge ist gleichbleibend, da sie durch Ventile (D) reguliert wird.

Abbildung 2 zeigt den Schnitt eines Brenners, bestehend aus einem Rohr (G) mit Löchern (H) für den Gasaustritt; das Gas saugt dank der Venturisaugdüsenform der Schotte, die Luft von unten an, verbrennt mit dieser oberhalb der Schotte (I) und erhitzt dabei die Metallkuppel (B); diese Metallkuppel verteilt dann die Hitze auf die Speisen, die sich auf dem darüberliegenden Rost befinden.

Die Kuppel (B) ist mit den Schotten (I) durch die oberen waagrechten Ränder der Schotten (I) selbst verbunden; auf diesen waagrechten Rändern befinden sich Löcher (L), durch die Luft eindringt, die die verbrannten Gas zur Entlüftung (E) transportiert.

Der obere Teil der Kuppel kann, wie die Abbildung zeigt, rund sein, kann aber auch andere Formen haben, wie z.B. spitz, flach, usw..

Daher werden, bezugnehmend auf die vorausgegangene Beschriebung und die beigefügten Abbildungen, folgende Patentansprüche gestellt.

## Patentansprüche

1. Vorrichtung zum Garen von Speisen auf einem Rost (F), unter dem eine Reihe von mit Gas beschickten, gelochten Brennerrohren (G) angeordnet ist, von denen jedes durch eine in Längsrichtung des Rohres (G) verlaufende, nach unten offene Kuppel (B) abgedeckt ist, dadurch gekennzeichnet, daß zu beiden Seiten des Brennerrohres (G) zwischen diesem und der Innenwand der Kuppel (B) eine Schottwand (I) angebracht ist, deren Abstand zu dem Rohr (G) nach oben hin abnimmt, wodurch ein Ansaugkanal für die von unten zuströmende und sich mit dem aus den Löchern (H) des Brennerrohres (G) austretenden Gas vermischende Luft gebildet wird.

2. Vorrichtung nach Anspruch 1, dadurch gekennzeichnet, daß jede Schottwand (I) mit ihrem oberen Rand horizontal nach außen abgewinkelt und an der Innenwand der Kuppel (B) befestigt ist, wobei in den horizontalen Rand Luftansauglöcher (L) eingearbeitet sind.

3. Vorrichtung nach Anspruch 1 oder 2, dadurch gekennzeichnet, daß die Brennerrohre (G) mit den diese abdeckenden Kuppeln (B) in Richtung auf einen Entlüfter (E) nach oben geneigt verlaufen.

4. Vorrichtung nach einem der vorhergehenden Ansprüche, dadurch gekennzeichnet, daß unterhalb der Brennerrohre (G) ein Wasserbehälter (C) angeordnet ist, dessen Wasserzufuhr über ein Ventil (D) regulierbar ist.

## Claims

1. Device for cooking food on a grill (F) under which a row of perforated gas burner tubes (G) is arranged, each of which is covered by a dome-shaped element (B) having an open base and extending in the longitudinal direction of the tube (G), characterised in that a bulkhead (I) is provided at both sides of the tube (G) between said tube and the inner wall of the dome-shaped element (B), the distance between the bulkhead (I) and the tube (G) decreasing upwardly forming in this way a suction channel for the air incoming from below and being mixed with the gas flowing out of the holes (H) of said tube (G).

2. Device according to claim 1, wherein the upper edge of each of said bulkheads (I) is horizontally bent outwardly and fastened to the inner wall of the dome - shaped element (B), said horizontal edge being provided with air aspirating holes (L).

3. Device according to claim 1 or 2, wherein said tubes (G) and said dome-shaped elements (B) covering the tubes have an arrangement upwardly inclined towards an exhauster (E).

4. Device according to anyone of the preceding claims, wherein a water reservoir (C) is provided under said tubes (G), the water feed of which is being controlled by a valve (D).

## Revendications

1. Dispositif pour cuire des aliments sur un gril (F) sous lequel est placée une série de tuyaux perforés (G) à gaz, dont chacun est couvert par une coupole (B) à base ouverte qui s'étend dans le sens longitudinal dudit tuyau (G), caractérisé par le fait que de chaque côté dudit tuyau à gaz (G) est placé, entre le tuyau (G) et la paroi interne de la coupole (B), une cloison (I), dont la distance au tuyau (G) décroît vers le haut, formant de cette façon un passage d'aspiration pour l'air affluant d'en bas et se mêlant avec le gaz s'échappant des trous (H) du tuyau perforé (G).

2. Dispositif selon la revendication 1, caractérisé par le fait que chaque cloison (I) présent un bord supérieur horizontal plié vers l'extérieur, fixé à la paroi interne de la coupole (B) et muni d'orifices d'aspiration d'air (L).

3. Dispositif selon la revendication 1 ou 2, caractérisé par le fait que les tuyaux perforés (G) et les coupoles (B) couvrant lesdits tuyaux présentent une inclinaison ascendante vers un désaérateur (E).

4. Dispositif selon une quelconque des revendications précédentes, caractérisé par le fait qu'au-dessous des tuyaux perforés (G) est prévu un réservoir d'eau (C) dont l'amenée d'eau est réglée par l'intermédiaire d'une valve (D).
